# FASCICULE DE BREVET EUROPEEN

(11) **EP 3 113 099 B1**
(45) Date de publication et mention de la délivrance du brevet: **13.01.2021**
(21) Numéro de dépôt: 16177234.8
(22) Date de dépôt: 30.06.2016
(51) Int. Cl.: G06Q 20/38, G06Q 20/32, G06Q 40/02

(54) **CONTENEUR DE PAIEMENT, PROCÉDÉ DE CRÉATION, PROCÉDÉ DE TRAITEMENT, DISPOSITIFS ET PROGRAMMES CORRESPONDANTS**
ZAHLUNGSBEHÄLTER, ERSTELLUNGSVERFAHREN, VERARBEITUNGSVERFAHREN, ENTSPRECHENDE VORRICHTUNGEN UND PROGRAMME
PAYMENT CONTAINER, CREATION METHOD, PROCESSING METHOD, DEVICES AND PROGRAMS THEREFOR

(30) Priorité: 03.07.2015 FR 1556349
(43) Date de publication de la demande: 04.01.2017
(73) Titulaire: Ingenico Group, 75015 Paris (FR)
(72) Inventeur: QUENTIN, Pierre, 95880 ENGHIEN-LES-BAINS (FR); DUCROHET, Vincent, 78210 SAINT-CYR-L'ECOLE (FR); LEGER, Michel, 78100 SAINT-GERMAIN-EN-LAYE (FR)
(74) Mandataire: Vidon Brevets & Stratégie

(56) Documents cités:
- WO-A1-2014/162296
- KR-A- 20120 105 296
- US-A1- 2012 150 687

## Description

### 1. Domaine

La présente technique se rapporte à la problématique du paiement. Plus particulièrement, l'invention se rapporte à la problématique du paiement par carte bancaire. En Europe, la carte bancaire est le moyen de paiement le plus utilisée. Elle est utilisée à la fois physiquement pour réaliser des paiements chez des commerçants; Elle est également utilisée pour réaliser des paiements en ligne. Cependant, elle est aussi sujette à la fraude.

### 2. Art Antérieur

Une carte bancaire permet de réaliser des achats selon deux types de procédés différents : des achats de type « carte présente » sont réalisés lorsque l'utilisateur présente physiquement sa carte bancaire à un commerçant, lequel possède un terminal de paiement physique. Dans cette configuration, en fonction des pays, des législations et des terminaux de paiement à disposition, l'utilisateur (l'acheteur) peut utiliser soit une carte à puce (également appelée « smartcard »), soit une carte à bande magnétique (c'est par exemple le cas aux États-Unis), ou encore une carte sans contact. Il existe également des cartes multimodales qui comprennent les trois technologies précédemment mentionnées. Des achats de type « carte non présente » (CNP) sont également possibles en utilisant une carte bancaire. Il s'agit principalement d'achats en ligne et également par téléphone qui sont réalisés en utilisant un ordinateur, une tablette, un smartphone ou un téléphone. Pour réaliser ce type d'achat, l'utilisateur effectue une saisie, ou communique oralement des données visuelles de sa carte : numéro de carte, date de validité, nom du titulaire, cryptogramme visuel. Ces données sont transmises, par l'intermédiaire d'un réseau de communication, à un ou plusieurs serveurs, afin que le paiement puisse être réalisé.

La différence entre ces deux types de paiement est majeure. Autant il est aisé d'utiliser une carte bancaire en mode « carte présente », autant il est fastidieux de devoir saisir ses données de carte bancaires dans des formulaires de pages web. Ainsi, beaucoup de personnes stockent leurs données de carte de crédit au sein d'un fichier pour rendre les opérations de paiement plus simple. Des solutions permettent de gérer ces données de manière centralisée (par exemple DashLane™). Ces solutions logicielles, installées sur le dispositif de communication (l'ordinateur ou sur la tablette) de l'utilisateur, permettent de saisir automatiquement, dans les champs prévus à cet effet, les données qui ont été préalablement saisies dans le logiciel. Cependant, d'une part cela oblige à saisir ces données dans un logiciel tiers, qu'il faut au préalable installer sur le dispositif de communication de l'utilisateur ; d'autre part, cette solution nécessite de faire confiance à l'éditeur de ce logiciel pour la conservation de ces données. Des solutions en ligne existent également : elles permettent de ne pas avoir à installer de logiciels sur dispositif de communication de l'utilisateur, mais elles nécessitent tout de même de faire confiance à un éditeur (par exemple Google™) pour la conservation de ces données. Or cette confiance a été grandement altérée ces dernières années. Par ailleurs, cette solution de préservation, au sein du dispositif de communication, des données de carte bancaire peut poser problème en cas de vol ou de perte du dispositif de communication.

Une autre solution appelée « Card-on-File » (de l'anglais pour « Carte sur fichier »), permet de réaliser un stockage des données de carte bancaire directement chez le commerçant. Le commerçant conserve, au sein de son infrastructure logicielle, les données de carte bancaires. Cela simplifie le processus de paiement puisqu'une fois que l'utilisateur s'est identifié, il est juste nécessaire d'accepter le paiement ou la commande pour que le paiement soit effectif. Cette solution, cependant, n'est pas avantageuse car elle requiert d'avoir confiance dans tous les marchands en ligne susceptibles de disposer des données de carte bancaire de l'utilisateur (en l'occurrence, il faut surtout avoir confiance dans les infrastructures de ces commerçants, et avoir confiance dans le fait qu'elles sont protégées contre le vol et l'usurpation). Cette solution n'est de plus pas définitive car lorsque la carte expire (par exemple lorsqu'elle arrive à sa date d'expiration), il est nécessaire de mettre à jour l'ensemble des données bancaires sur les sites web ou organisation auprès desquelles une solution « Card-on-File » a été mise en œuvre (par exemple des organismes de crédit, d'assurance, etc.). Enfin, le problème principal de la technique « Card-on-File » consiste finalement à donner ses données de carte bancaire sans assurance de leur destination ou utilisation finale. Le document WO 2014/162296 A1 décrit la possibilité de générer, au niveau d'un terminal de communication d'un utilisateur, un jeton de pré-autorisation de paiement qui peut être communiqué à un commerçant pour la réalisation d'une transaction donnée, en lieu et place de données bancaires personnelles de l'utilisateur. Toutefois, cette solution se rapporte à la mise en œuvre d'une pré-autorisation de paiement associée à un montant donné auprès d'un commerçant donné, à une date de paiement donnée. Un tel jeton de pré-autorisation n'offre donc pas la souplesse d'un instrument de paiement qui permet à un utilisateur d'effectuer librement et au moment de son choix des transactions auprès de divers commerçants tant que le solde associé à cet instrument de paiement n'est pas épuisé.

D'une manière générale, la fraude à la carte bancaire est principalement réalisée pour les paiements en ligne. Cependant, la perte ou le vol d'une carte bancaire est un évènement qui peut avoir des répercussions importantes pour les personnes impliquées : retrait d'argent liquide (surtout si le vol de la carte s'est accompagné du vol du code confidentiel accompagnant celle-ci), paiements en ligne.

### 3. Résumé

La présente technique ne présente pas ces inconvénients de l'art antérieur. Plus particulièrement, la présente technique se rapporte à un procédé de traitement de données transactionnelles de manière sécurisée qui offre un niveau élevé d'utilisabilité pour les consommateurs. Grace à la présente technique, le paiement peut être réalisé en toute sécurité avec un faible niveau de fraude ; Par ailleurs, la solution proposée est simple pour l'utilisateur et ne ralentit pas le paiement.

Plus particulièrement dans un premier aspect, il est divulgué un Procédé de création d'une structure de données de paiement, dite conteneur de paiement, procédé de création mis en œuvre par un terminal de communication mobile, ledit conteneur de paiement comprenant au moins une donnée représentative d'un identifiant bancaire d'un utilisateur.

Selon la présente technique, le procédé comprend :
- la sélection, par un utilisateur et par l'intermédiaire d'une interface homme-machine, d'au moins un attribut dudit conteneur ;
- l'obtention, par le terminal de communication, d'au moins une donnée représentative de la carte bancaire de l'utilisateur ;
- la validation, par l'utilisateur de la création du conteneur de paiement ;
- la transmission, par ledit terminal de communication, dudit conteneur de paiement à un serveur de traitement de conteneur de paiement.

Ainsi, l'utilisateur peut définir de manière simple et sécurisé, une somme d'argent qu'il peut par la suite employer pour effectuer un paiement, sans que l'utilisateur n'ait besoin d'utiliser sa carte bancaire.

Selon un mode de réalisation particulier, ladite étape d'obtention par le terminal de paiement, moins une donnée représentative de la carte bancaire de l'utilisateur comprend :
- une étape de transmission, à ladite carte bancaire, par l'intermédiaire d'une interface de transmission de données sans contact, d'une requête d'obtention de données, sous la forme d'un signal ;
- une étape de réception d'une réponse à ladite requête, sou la forme d'un signal modulé ;
- une étape de décodage dudit signal modulé délivrant ladite au moins une donnée.

Ainsi, l'utilisateur n'a même pas besoin de saisir les données de sa carte bancaire ; Il lui suffit d'apposer celle-ci sur son terminal de communication.

Selon un mode de réalisation particulier, ladite étape d'obtention par le terminal de paiement, moins une donnée représentative de la carte bancaire de l'utilisateur comprend :
- une étape d'activation d'un dispositif de prise de vue du terminal de communication ;
- une étape d'obtention, à l'aide du dispositif de prise de vue, d'une image de la carte bancaire ;
- une étape de mise en œuvre d'un module de reconnaissance de caractères, à partir de l'image de la carte bancaire, délivrant ladite au moins une donnée.

Ainsi, l'utilisateur n'a même pas besoin de saisir les données de sa carte bancaire ; Il lui suffit de prendre celle-ci en photo à l'aide de son terminal de communication.

Selon une caractéristique particulière, le procédé comprend en outre une étape de détermination, par ledit terminal de communication, d'une valeur représentative d'un attribut de transmission dudit conteneur de paiement.

Selon une caractéristique particulière, le procédé comprend en outre, lorsque la valeur représentative de l'attribut de transmission dudit conteneur de paiement est positive, une étape de détermination, par ledit terminal de communication, d'une valeur représentative d'un attribut de débit dudit conteneur de paiement.

Selon une caractéristique particulière, le procédé de création caractérisé en ce qu'il comprend, préalablement à la sélection d'un paramètre de conteneur,
- l'activation, sur le terminal de communication de l'utilisateur d'un module de gestion de conteneur de paiement ;
- la sélection, au sein de ce module, d'un mode de fonctionnement dit de création de conteneur.

Selon une caractéristique particulière, l'activation du module de gestion est accompagnée de l'authentification dudit utilisateur auquel ledit terminal de communication et ladite carte de paiement appartiennent.

Selon un mode de réalisation particulier, la sélection, par un utilisateur et par l'intermédiaire d'une interface homme-machine, d'au moins un attribut dudit conteneur comprend la sélection d'au moins une valeur d'attribut pour au moins un des paramètres suivants :
- date de validité du conteneur de paiement ;
- durée de validité du conteneur de paiement ;
- montant du conteneur de paiement ;
- catégorie de bénéficiaire du conteneur de paiement ;
- bénéficiaire du conteneur de paiement.

Dans un autre mode de réalisation, la technique se rapport également à un dispositif de de création d'une structure de données de paiement, dite conteneur de paiement, ledit conteneur de paiement comprenant au moins une donnée représentative d'un identifiant bancaire d'un utilisateur.

Un tel dispositif comprenant au moins un module configuré pour permettre :
- la sélection, par un utilisateur et par l'intermédiaire d'une interface homme-machine, d'au moins un attribut dudit conteneur ;
- l'obtention, par le terminal de communication, d'au moins une donnée représentative de la carte bancaire de l'utilisateur ;
- la validation, par l'utilisateur de la création du conteneur de paiement ;
- la transmission, par ledit terminal de communication, dudit conteneur de paiement à un serveur de traitement de conteneur de paiement.

Un tel module peut se présenter sous une forma matérielle ou logicielle. Dans une forme matérielle, un tel module prend par exemple la forme d'un processeur sécurisé spécialement configuré pour mettre en œuvre la technique proposée.

Selon un deuxième aspect, il est également divulgué un procédé de traitement, par un serveur de traitement, d'une structure de données de paiement, dite conteneur de paiement, ledit conteneur de paiement faisant l'objet d'une utilisation auprès d'un commerçant par un utilisateur disposant d'un terminal de communication lié audit conteneur de paiement, procédé caractérisé en ce qu'il comprend les étapes suivantes :
- réception des données en provenance du terminal de paiement, comprenant l'identifiant du conteneur de paiement ;
- obtention d'un identifiant de commerçant, éventuellement accompagné d'un code de catégorie de marchand lorsque celui-ci n'est pas fourni par le commerçant ;
- en fonction de l'identifiant du conteneur de paiement, détermination d'un identifiant d'un établissement bancaire auquel le conteneur de paiement est attaché ;
- en fonction de l'identifiant bancaire du conteneur de paiement, obtention d'une autorisation de paiement ; et
- lorsque l'autorisation de paiement délivrée, une étape de transmission, au terminal du commerçant, d'une donnée représentative de l'acceptation de la transaction.

Ainsi, un paiement peut être mis en œuvre, à l'aide d'un conteneur de paiement, sans nécessiter l'intervention d'une carte bancaire ayant servi à la création de ce conteneur de paiement.

Selon un mode de réalisation particulier, ladite étape d'obtention d'une autorisation de paiement comprend les étapes suivantes :
- lorsque l'établissement bancaire du conteneur de paiement est le même que l'établissement bancaire du serveur de traitement :
- obtention des attributs du conteneur ;
- vérification du solde restant au sein le conteneur de paiement ;
- lorsque le solde restant au sein du conteneur de paiement est supérieur au montant de la transaction :
- vérification qu'aucun des attributs du conteneur de paiement n'est en contradiction avec les données de la transaction ;
- lorsqu'aucun des attributs de paiement n'est violé, délivrance de l'autorisation de paiement ;
- soustraction un montant de la transaction du solde restant au sein du conteneur de paiement ;
- lorsque le solde restant au sein du conteneur de paiement est inférieur au montant de la transaction, transmission d'une absence d'autorisation ;

Selon un mode de réalisation particulier, ladite étape d'obtention d'une autorisation de paiement comprend les étapes suivantes :
- lorsque l'établissement bancaire du conteneur de paiement est différent de l'établissement bancaire du serveur de traitement :
   - identification du serveur de traitement auquel les données de transaction doivent être transmises ;
   - transmission des données de de transaction à ce serveur de traitement ;
   - réception de l'autorisation ou du refus de paiement.

La technique se rapporte également à un serveur de traitement d'une structure de données de paiement, dite conteneur de paiement, ledit conteneur de paiement faisant l'objet d'une utilisation auprès d'un commerçant par un utilisateur disposant d'un terminal de communication lié audit conteneur de paiement. Un tel serveur comprend des moyens de :
- réception des données en provenance du terminal de paiement, comprenant l'identifiant du conteneur de paiement ;
- obtention d'un identifiant de commerçant, éventuellement accompagné d'un code de catégorie de marchand lorsque celui-ci n'est pas fourni par le commerçant ;
- en fonction de l'identifiant du conteneur de paiement, détermination d'un identifiant d'un établissement bancaire auquel le conteneur de paiement est attaché ;
- en fonction de l'identifiant bancaire du conteneur de paiement, obtention d'une autorisation de paiement ; et
- lorsque l'autorisation de paiement délivrée, une étape de transmission, au terminal du commerçant, d'une donnée représentative de l'acceptation de la transaction ;

D'autres aspects de la présente technique sont également divulgués dans la présente.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages de la technique proposée apparaîtront plus clairement à la lecture de la description suivante d'un mode de réalisation préférentiel, donné à titre de simple exemple illustratif et non limitatif, et des dessins annexés, parmi lesquels :
- la figure 1 présente un conteneur de paiement selon la présente technique ;
- la figure 2 décrit les étapes mises en œuvre pour créer un conteneur de paiement.
- la figure 3 les étapes mises en œuvre, côté serveur, pour utiliser un conteneur de paiement.
- la figure 4 décrit brièvement l'architecture physique d'un dispositif de création et d'utilisation de conteneur de paiement.
- la figure 5 décrit brièvement l'architecture physique du serveur de traitement.

### 5. Description

Comme exposé préalablement, l'objet de la présente est de simplifier les opérations de paiement dans des situations particulières. La technique vise ainsi à répondre à une problématique de paiement ou de transfert d'argent. La technique proposée s'applique particulièrement bien à *l'utilisation* (paiement, transfert) d'une certaine quantité d'argent sans avoir à utiliser sa carte bancaire. La technique se base notamment sur la mise en œuvre *d'un conteneur de paiement,* qui comprend un certain nombre d'information pour effectuer un paiement de manière simple et rapide. La technique décrite porte également sur le traitement de paiement réalisé avec le conteneur de paiement. Ces traitements sont principalement réalisés avec un serveur de traitement de transaction, également appelé serveur de traitement. Un tel serveur de traitement peut, en fonction des modes de réalisation et des conditions opérationnelles, être un serveur bancaire (i.e. un serveur d'une institution bancaire). Il peut également être un serveur intermédiaire (par exemple un concentrateur qui se charge d'organiser et de traiter l'ensemble des transactions d'un groupe de commerçants et/ou de marchands donnés. Il peut également s'agir d'un serveur intermédiaire, qui fait le lien entre des serveurs bancaires appartenant à différents établissements bancaires.

### 5.1. Conteneur de paiement

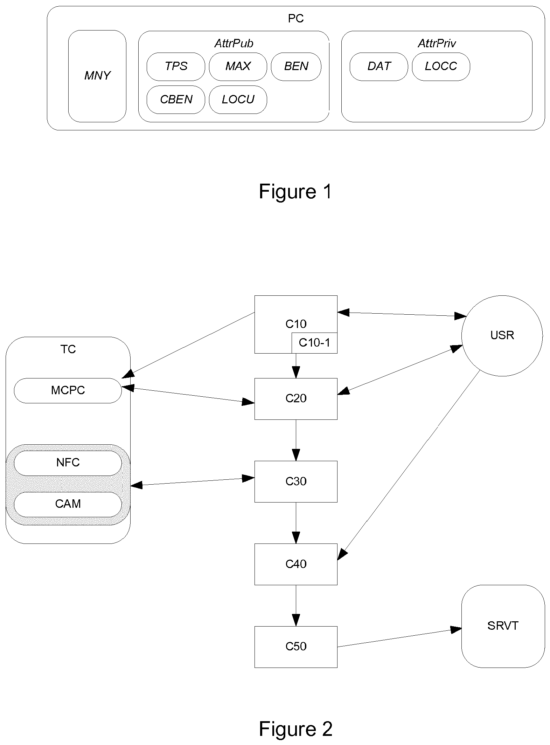

Le conteneur de paiement est une structure de données, qui peut éventuellement être chiffrée (et donc sécurisée) et qui contient un certain nombre d'informations relatives à une somme d'argent. On peut définir le conteneur de paiement comme une enveloppe contenant une certaine somme d'argent, associée à une carte bancaire d'un compte bancaire déterminé (en l'occurrence, le compte bancaire de l'utilisateur qui créé le conteneur de paiement). La figure 1 illustre un conteneur de paiement (PC).

Selon les modes de réalisation et les mises en œuvre opérationnelles, cette somme d'argent (MNY) s'accompagne d'un certain nombre d'attributs : des attributs sont « publics » (AttrPub) et d'autres sont privés (AttrPriv). Parmi les attributs publics possibles, on trouve notamment au moins une donnée temporelle (TPS), qui peut être une durée d'utilisation ou une date limite d'utilisation, un montant maximum (MAX), un bénéficiaire (BEN) et/ou une catégorie de bénéficiaire (CBEN), la localisation d'utilisation (LOCU). D'autres données, à visée sécuritaire et réglementaire, sont privés (AttrPriv) : telles que la date (DAT) à laquelle le conteneur est créé, le lieu (approximatif ou non) (LOCC) de cette création, peuvent être incluses. Les attributs privés permettent de garantir la non répudiation du conteneur de paiement. Ils permettent également de se prémunir de la fraude. Un certain nombre d'attributs privés sont inséré par le serveur de traitement lui-même, lors de la validation par le terminal. Ces attributs privés ne sont pas modifiables par les utilisateurs.

Chaque attribut du conteneur de paiement possède une fonction déterminée :
- la date de validité détermine une date limite d'utilisation du conteneur de paiement ; au-delà de cette date, le conteneur n'est plus utilisable ; la date limite est sensiblement égale, en terme de fonction à la durée limite : une fois passée la durée limite, le conteneur n'est plus utilisable ;
- le montant maximum ne détermine pas le montant du conteneur. Le montant maximum détermine la somme maximum d'argent pour laquelle le conteneur peut être utilisé à chaque fois ; par exemple, un conteneur peut contenir une somme de 100 € et le montant maximum peut être fixé à 20 €. Dès lors, une transaction utilisant ce conteneur sera limitée à un montant maximum de 20 € ;
- la catégorie de bénéficiaire détermine le type de commerçant avec lequel le conteneur peut être utilisé. Par exemple, l'utilisateur peut choisir de limiter l'utilisation du conteneur à des commerces de type « alimentaires » en excluant les commerces de vente de tabac ; cet aspect est explicité en détail ci-après ;
- le bénéficiaire détermine un commerçant en particulier avec lequel le conteneur peut être utilisé ; cet aspect est explicité en détail ci-après ;
- la localisation d'utilisation définit une sphère géographique au sein de laquelle le conteneur peut être utilisé (ville, région, pays, etc.) ;

En ce qui concerne le bénéficiaire, ou la catégorie de bénéficiaire, il est offert la possibilité à l'utilisateur, de déterminer le type d'achat permit avec le conteneur. L'utilisateur a ainsi la possibilité de restreindre l'utilisation du conteneur. Ainsi, quand bien même un individu mal intentionné parviendrait à se procurer le terminal de communication de l'utilisateur et qu'il réussirait à lancer une opération de paiement avec un conteneur, la vérification du bénéficiaire ou de la catégorie de bénéficiaire du conteneur permet d'assurer que l'individu mal intentionné ne pourra pas utiliser le conteneur comme il le souhaite. Ce blocage du conteneur de paiement est rendu possible en comparant le MCC (de l'anglais « merchant category code ») défini pour ce marchand avec une liste de MCC autorisée par le créateur du conteneur de paiement.

Pour ce qui est du bénéficiaire, le principe est le même que précédemment : à la place de sélectionner un ou plusieurs MCC, l'utilisateur sélectionne un ou plusieurs identifiants de commerçant avec lequel il souhaite que le conteneur soit utilisable.

Une fois que le conteneur de paiement est créé (voir infra), il est transmis au serveur de traitement pour y être enregistré. On considère qu'un serveur de traitement dispose de mesures de sécurité suffisantes pour que le conteneur de paiement soit enregistré au sein du serveur sous une forme déchiffrée. Cependant, il se peut également que le conteneur de paiement ne soit pas transmis à un serveur de traitement mais directement à un autre terminal de communication d'un autre utilisateur. Dans ce cas, il est transmis sou une forme chiffrée.

Un conteneur de paiement peut également comprendre un attribut de dépassement, dont l'utilisation peut être limitée (par exemple pas pour la transmission et pas pour un débit immédiat) : l'attribut de dépassement permet de définir un pourcentage de dépassement autorisé, soit pour le montant du conteneur, soit pour le montant maximum autorisé. Un tel attribut permet de fixer une fourchette de montant maximum sans être trop strict sur le montant lui-même.

On note que le conteneur de paiement selon la présente technique n'est pas un portefeuille (« wallet »), tel que par exemple les portefeuilles de Google™ ou de Paypal™. En effet, ces portefeuilles ne comprennent pas les attributs qui sont définis pour un conteneur de paiement. Ils ne possèdent notamment pas de montant alloué, pas plus qu'une durée d'utilisation ou une catégorie de bénéficiaire. Ces portefeuilles se contentent de faire le lien entre un numéro de compte ou un numéro de carte de crédit, d'un utilisateur au sein d'une institution bancaire, et un terminal de communication mobile.

On note également que le conteneur de paiement n'est pas une préautorisation de débit. En effet, le serveur de traitement, qui conserve le conteneur de paiement, ne débite pas immédiatement le compte de l'utilisateur lors de la création ou de la réception de ce conteneur. Il ne fait pas non plus de réservation de somme d'argent : cela signifie qu'il n'y a pas de soustraction effectuée *sur le montant d'autorisation* de la carte bancaire du client *(comme cela est le cas par exemple pour l'établissement d'une caution par carte bancaire).* Si le conteneur n'est pas utilisé (par exemple parce que le délai d'utilisation du conteneur est dépassé avant une quelconque utilisation) alors aucun débit n'est effectué sur le compte du client et aucune soustraction n'est faite sur le montant global d'autorisation de la carte. Dans une préautorisation, au contraire, bien qu'aucune somme d'argent ne soit débitée au moment de la préautorisation, *une soustraction est effectuée du plafond de paiement de la carte bancaire.* Une telle soustraction n'est d'ailleurs pas sans poser de nombreux problèmes aux titulaires de cartes car elle peut entrainer le blocage de la carte alors même qu'aucun paiement n'est réellement effectué. Par ailleurs, une autorisation de paiement ne peut être concrétisée (par un paiement réel) que par le commerçant ayant effectué cette préautorisation, et non par n'importe quel commerçant, à la différence du conteneur de paiement.

Dans un mode de réalisation spécifique, le conteneur de paiement peut faire l'objet d'un débit immédiat du compte bancaire de l'utilisateur. Une telle situation peut se produire quand le conteneur de paiement est transmis à un tiers en vue d'une utilisation par une personne qui n'est pas le créateur du conteneur de paiement. Lorsque l'utilisateur effectue la création d'un conteneur de paiement destiné à un tiers, le créateur peut valoriser un attribut spécifique, appelé *attribut de transmission,* indiquant que le conteneur ne lui est pas destiné. Le tiers auquel l'attribut est destiné n'est pas nécessairement connu au moment de la création du conteneur de paiement. Lorsque l'attribut de transmission est valorisé à « vrai », cela ouvre la possibilité de valoriser un sous attribut (un attribut dépendant) appelé attribut de débit. L'attribut de débit permet d'indiquer soit que le conteneur de paiement doit faire l'objet d'un débit immédiat (attribut valorisé à « vrai »), soit que le conteneur de paiement ne doit pas faire l'objet d'un débit immédiat (attribut valorisé à « faux »).

Lorsqu'un débit immédiat est requis, le montant du conteneur de paiement est débité du compte bancaire de l'utilisateur, par la mise en œuvre d'une transaction de carte bancaire de type « EMV ». Pour l'utilisateur créateur du conteneur de paiement, il s'agit d'une transaction par carte bancaire classique.

Lorsqu'aucun débit immédiat n'est requis, le compte de l'utilisateur est débité en fonction de plusieurs paramètres qui sont explicités par la suite.

### 5.2. Création d'un conteneur de paiement

### 5.2.1. Création d'un conteneur sur un terminal de communication

On rappelle que l'un des problèmes auquel le conteneur de paiement tente de répondre est de permettre à des utilisateurs de terminaux de communication intelligents (de type smartphone) de disposer en permanence d'un moyen de paiement simple et sécurisé qui remplace la carte bancaire. En effet, de nombreux utilisateurs sont inquiets d'une perte ou d'un vol de leur carte. Le conteneur de paiement offre une telle possibilité. Encore faut-il que le conteneur de paiement réponde à un certain nombre d'autres exigences, notamment en termes de facilité de création. La présente méthode est décrite en relation avec la figure 2

Les inventeurs ont ainsi eu l'idée de mettre en œuvre une méthode basée sur l'utilisation d'un terminal de communication intelligent de type smartphone (TC), ce terminal étant équipé d'une part d'une interface de lecture sans contact (NFC) ou équipé d'une caméra (CAM) et d'autre part d'un module de création de conteneur de paiement (MCPC). Selon les modes de réalisation, un tel module peut être un module dédié, un module de portefeuille (« wallet ») ou un module bancaire (le module bancaire de l'utilisateur, disponible sur son terminal de communication). Un avantage de l'utilisation d'un module bancaire est qu'un tel module est généralement bien sécurisé. Dès lors, dans la mesure où le conteneur de paiement est intimement lié à la carte bancaire et/ou au compte bancaire de l'utilisateur, il semble simple (et légitime) que le module bancaire du titulaire de la carte soit, dans un mode de fonctionnement particulier, utilisée pour créer les conteneurs de paiement.

La création d'un conteneur de paiement comprend :
- l'activation, (C10) sur le terminal de communication de l'utilisateur du module ;
- la sélection, (C10-1) au sein de ce module, d'un mode de fonctionnement dit de création de conteneur ;
- la sélection et/ou saisie (C20), par l'utilisateur, des attributs du conteneur (date ou durée de validité, montant du conteneur, bénéficiaire et/ou catégorie de bénéficiaire) ;
- la valorisation (éventuelle) de l'attribut de transmission ; par défaut, l'attribut de transmission prend la valeur « faux », et dans le cas où cet attribut est positionné à « vrai », la valorisation d'un identifiant d'un destinataire ;
- la valorisation (éventuelle) de l'attribut de débit; par défaut, l'attribut de débit prend la valeur « faux » ;
- l'obtention (C30) d'un donnée de carte bancaire (par exemple l'apposition, sur le terminal de communication, de la carte bancaire de l'utilisateur; alternativement à l'apposition de la carte (cas du NFC), l'appareil photo du terminal de communication peut être utilisé pour prendre un cliché de la carte bancaire de l'utilisateur et effectuer une reconnaissance de caractères) ;
- la validation (C40), par l'utilisateur de la création du conteneur de paiement; cela passe par exemple par l'appui sur un bouton de validation.
- la transmission (C50), du conteneur de paiement à un serveur de traitement (SRVT).

### 5.2.2. Traitement, par le serveur de traitement, du conteneur créé par le terminal de communication

Une fois créé sur le terminal de communication de l'utilisateur, le conteneur de paiement est transmis, sous une forme sécurisée, au serveur de traitement. Le serveur de traitement met en œuvre un procédé de traitement qui comprend :
- la réception du conteneur de paiement, comprenant une étape de déchiffrage, avec une ou plusieurs clés en possession du serveur de traitement ;
- l'attribution d'un identifiant servant à identifier le conteneur de manière unique ;
- la retransmission de cet identifiant au terminal de communication de l'utilisateur créateur ;
- le stockage, dans une structure de données adaptée, de ce conteneur.
- Le traitement du conteneur, comprenant notamment, en cas de positionnement de l'attribut de débit à « vrai », une étape de débit du montant du conteneur.

Le conteneur de paiement est alors prêt à être utilisé, soit par le terminal de communication qui a effectué sa création, soit par un autre canal.

### 5.2.3. Transmission, par le serveur de traitement, à un destinataire, du conteneur créé par le terminal de communication.

Le traitement du conteneur de paiement peut également comprendre une étape de transmission du conteneur de paiement, par le serveur de traitement (par exemple le serveur bancaire), à une entité réceptrice (par exemple un autre serveur de traitement ou un serveur bancaire). L'étape de transmission du conteneur de paiement intervient lorsque le conteneur de paiement est destiné à être utilisé par une autre personne. Le serveur de traitement est alors en charge de rechercher cette autre personne. Ceci est effectué en utilisant l'attribut « destinataire », lequel comprend un identifiant de l'utilisateur à qui le conteneur de paiement est destiné. Cet identifiant peut prendre plusieurs formes, dont deux sont précisées ci-après. L'identifiant est utilisé par le serveur de traitement soit directement pour effectuer une transmission du conteneur de paiement au destinataire (cas le plus simple correspondant à un destinataire connu du serveur de traitement) soit indirectement pour obtenir des données complémentaires permettant d'effectuer une transmission du conteneur de paiement.

Dans une première alternative, l'identifiant du destinataire est un identifiant bancaire, connu du terminal de communication qui effectue la création du conteneur de paiement. Cet identifiant bancaire peut par exemple être l'identifiant bancaire correspondant à un destinataire proche de l'utilisateur (un parent, un enfant, etc.). L'identifiant bancaire peut se présenter sous la forme d'un simple numéro de compte (cas où le créateur du conteneur et le destinataire partagent le même établissement bancaire). L'identifiant bancaire peut également être un BIC ou un IBAN (lorsque le créateur et le destinataire ne partagent pas le même établissement bancaire).

Dès lors, dans cette première alternative, le serveur de traitement effectue soit le déplacement du conteneur (i.e. l'affectation du conteneur à un autre compte) lorsque le créateur et le destinataire sont gérés par le même établissement bancaire, soit la transmission du conteneur de paiement à un serveur de l'établissement bancaire du destinataire.

Dans une deuxième alternative, l'identifiant est une donnée représentative d'un contact du terminal de communication de l'utilisateur : l'identifiant est obtenu après la sélection, par l'utilisateur, d'un destinataire dans la liste de contact. Dès lors l'identifiant peut être un numéro de téléphone mobile, une adresse de courrier électronique, un identifiant de messagerie instantanée, etc.

Dès lors, dans cette deuxième alternative, le serveur de traitement effectue au moins les actions suivantes :
- création d'un message d'information ; le message contient une adresse à laquelle le destinataire doit se connecter (par exemple une URL) ; l'adresse comprend un identifiant de transmission qui est par exemple le résultat d'une fonction de hachage dont les paramètres sont l'identifiant du destinataire et un identifiant du conteneur de paiement ;
- transmission du message d'information vers le destinataire en utilisant l'identifiant du conteneur de paiement (par exemple le message est un courrier électronique lorsque l'identifiant est une adresse de courrier électronique, le massage est un SMS ou un MMS lorsque l'identifiant est un numéro de téléphone mobile, etc.) ;

A réception de ce message, le destinataire se connecte à l'adresse qu'il contient et effectue les démarches nécessaire à la transmission du conteneur de paiement. Afin de garantir la sécurité de l'échange, les démarches impliquent des processus de sécurisation dont des processus de double identification et des processus de chiffrement. De manière complémentaire, des processus de radiation d'identifiant peuvent également être mis en œuvre.

### 5.2.4. Transmission, par le terminal de communication, du conteneur créé par le terminal de communication, à un destinataire

Le traitement du conteneur de paiement peut également comprendre une étape de transmission du conteneur de paiement, par le terminal de communication lui-même, vers le terminal de communication de l'utilisateur destinataire.

Pour le faire, lorsque l'utilisateur a validé un conteneur de paiement comprenant un attribut de transmission positionné à « vrai », la sélection du destinataire offre la possibilité de sélectionner une transmission dite « locale ». La transmission locale consiste à transférer localement, à un deuxième terminal de communication se situant à proximité, le conteneur de paiement. Ce deuxième terminal de communication est celui du destinataire. Le processus est le suivant :
- le terminal de communication de l'utilisateur créateur est approché du terminal de communication du destinataire ; éventuellement, cette étape est précédée du lancement, du processus par un bouton de validation ;
- le terminal de communication de l'utilisateur créateur émet une requête, par exemple une requête NFC ou Bluetooth, à destination du terminal de l'utilisateur destinataire ;
- le terminal de l'utilisateur destinataire répond à cette requête en transmettant un identifiant « destinataire » (c'est par exemple un identifiant du module bancaire installé sur le terminal de communication du destinataire, que l'utilisateur destinataire peut par exemple prendre le soin de lancer, ou bien qui se lance automatiquement) ;
- l'identifiant « destinataire » est inséré dans le conteneur de paiement, dans l'attribut « destinataire » ;
- le conteneur de paiement est chiffré puis transmis, par NFC ou Bluetooth, au terminal du destinataire.

Cette transmission est suivi ou précédée d'une transmission, au serveur de traitement, du conteneur de paiement afin que le serveur de traitement puisse également traiter celui-ci. Accessoirement, le conteneur de paiement comprend également une donnée représentative du serveur de traitement, afin que le terminal de communication du destinataire puisse être en mesure de localiser le conteneur. En effet, cette transmission au terminal du destinataire est complétée par un échange de données au niveau du ou des serveurs de traitement, comme cela est décrit précédemment.

### 5.3. Utilisation d'un conteneur de paiement.

En fonction des données qu'il contient, des modes de réalisation et des conditions opérationnelles, le conteneur de paiement peut ensuite être utilisé pour effectuer des paiements auprès de commerçants. Il peut également être utilisé pour effectuer des paiements en ligne.

L'utilisation d'un conteneur de paiement chez un commerçant comprend :
- l'activation, sur le terminal de communication de l'utilisateur, d'un module ; il peut s'agir d'un module bancaire (i.e. le module de la banque auprès de laquelle le conteneur de paiement est enregistrée), ou d'un module de type portefeuille (de l'anglais « wallet ») ;
- la sélection, au sein de ce module, d'un mode de fonctionnement dit de paiement sans contact ;
- éventuellement, la sélection d'un conteneur de paiement à utiliser (lorsque plusieurs conteneurs peuvent être utilisés) ;
- la présentation du terminal de communication devant le lecteur sans contact du terminal de paiement du commerçant ; lors de cette présentation, le terminal de paiement détecte l'utilisation du conteneur de paiement et met en œuvre, en lien avec le serveur de traitement auquel il est connecté, un processus de paiement qui est explicité ci-après (processus de traitement mis en œuvre par le serveur).

Ainsi, l'utilisation d'un conteneur de paiement chez un commerçant est une opération simple, qui ne nécessite pas d'effort particulier de la part de l'utilisateur. En effet, à la place de devoir introduire sa carte bancaire, il lui suffit d'apposer son terminal de communication sur le terminal de paiement. À la place de saisir un code PIN, il lui suffit de saisir un mot de passe dans le module de gestion des conteneurs de paiement (par exemple le module bancaire).

L'utilisation d'un conteneur de paiement pour un paiement en ligne comprend :
- l'activation, sur le terminal de communication de l'utilisateur, d'un module ; il peut s'agir d'un module bancaire (i.e. le module de la banque auprès de laquelle le conteneur de paiement est enregistrée), ou d'un module de type portefeuille (de l'anglais « wallet ») ;
- la sélection, au sein de ce module, d'un mode de fonctionnement dit de paiement en ligne ;
- éventuellement, la sélection d'un conteneur de paiement à utiliser (lorsque plusieurs conteneurs peuvent être utilisés) ;
- la génération, par le module, d'une donnée de paiement ;
- la saisie, au sein d'une zone de saisie donnée du site web (zone de saisie spécifique, lié au type de paiement par conteneur de paiement), de la donnée de paiement fournie par le module; postérieurement à cette saisie, le marchand met en œuvre, en lien avec le serveur de traitement auquel il est connecté, un processus de paiement qui est explicité ci-après.

Ainsi, l'utilisation d'un conteneur de paiement en ligne est une opération simple, qui ne nécessite pas plus d'effort de la part de l'utilisateur. En effet, à la place de saisir des données de carte bancaire, l'utilisateur saisit une donnée représentative d'un conteneur de paiement.

Les avantages procurés par l'utilisation d'un conteneur de paiement sont nombreux. En effet, l'utilisateur n'a pas besoin d'utiliser sa carte bancaire ; les utilisateurs très prudent, peuvent donc par exemple laisser leur carte bancaire dans un endroit sûr et être assurer que celle-ci ne pourra pas être perdue ou volée. Un cas d'utilisation typique d'un conteneur de paiement est celui-ci d'un utilisateur qui ne souhaite pas s'embarrasser de sa carte bancaire, par exemple lors d'un après-midi à la plage, de peur qu'on lui la vole et qui créé, sur son terminal de communication, un conteneur. Il créé ce conteneur pour une journée, avec un montant de 20 € par exemple. Si l'utilisateur souhaite par la suite effectuer un achat sur la plage, par exemple une boisson, il peut alors utiliser son terminal de communication pour régler cet achat. Un autre avantage est qu'ne cas de perte du terminal de communication, le montant maximum qui pourra être utilisé par une personne mal intentionnée est limité au montant du conteneur. Par ailleurs, il convient de garder à l'esprit que les terminaux de communication de type smartphone sont géolocalisables. En effet, de plus en plus de constructeur et de fournisseurs de services intègrent directement au sein du smartphone des technologies permettant de retrouver celui-ci s'il devait être égaré ou volé. Cela signifie que même en cas de perte, l'utilisateur a de grandes chances de retrouver son téléphone.

Un autre cas d'utilisation du conteneur de paiement est celui d'un transfert d'argent entre deux utilisateurs. Lorsqu'un utilisateur souhaite transmettre une somme d'argent à un autre, il créé, sur son terminal de communication, un conteneur de paiement de la somme qu'il souhaite transmettre. Il valorise l'attribut de transmission à « vrai » et l'attribut débit à « vrai » ou « faux » en fonction de la volonté de l'utilisateur. Il valide la création du conteneur de paiement.

Celui-ci est transmis au serveur de traitement qui détecte que le conteneur doit être transféré et qu'il doit faire l'objet d'un débit immédiat. Le serveur de traitement identifie alors le destinataire (qui peut dans ce cas être valorisé dans l'attribut « destinataire », par exemple en utilisant un numéro de téléphone ou un autre identifiant, comme cela a été présenté précédemment). À l'aide de cet identifiant, le serveur de traitement informe l'utilisateur destinataire qu'il bénéficie d'un transfert d'argent par l'intermédiaire d'un conteneur de paiement, puis met en œuvre le procédé de *transmission, par le serveur de traitement, à un destinataire, du conteneur créé par le terminal de communication.*

### 5.4. Traitement d'un conteneur de paiement auprès d'un serveur de traitement.

On traite en premier lieu du cas du traitement d'un conteneur de paiement par un serveur de traitement lorsqu'une opération de paiement est effectuée à l'aide d'un conteneur de paiement chez un commerçant. On suppose, en prérequis, que le terminal de paiement est en mesure d'accepter un paiement par l'intermédiaire d'un conteneur. En règle générale, cela suppose une mise à niveau logicielle du terminal de paiement (dans leur grande majorité, les terminaux disposent de modules de paiement sans contact, un changement de terminal de paiement n'est donc pas nécessaire).

Au moment du paiement, l'utilisateur indique au commerçant qu'il souhaite régler à l'aide d'un conteneur de paiement. Le commerçant active le terminal pour qu'il puisse recevoir ce type de paiement puis l'utilisateur met en œuvre la méthode décrite précédemment. Lorsqu'il présente le terminal de communication devant le terminal de paiement, le terminal de communication transmet, au terminal de paiement, l'identifiant du conteneur de paiement. Les échanges de données entre le terminal de paiement et le terminal de communication sont par exemple réalisés à l'aide de la norme d'échange ISO/IEC 14443-4:2008. L'identifiant du conteneur de paiement est donc par exemple transmis en utilisant cette norme. Une fois cet identifiant obtenu, le terminal de paiement met en œuvre une transaction de paiement, en relation avec le serveur de traitement auquel il est connecté. Les données transmises au serveur de traitement sont sensiblement identiques aux données transmises pour un paiement par carte bancaire à l'exclusion du PAN de la carte bancaire, qui est remplacé par l'identifiant du conteneur de paiement. Par ailleurs, le terminal du commerçant peut également inclure, dans les données transmises, une donnée représentative de son code MCC *(« merchant category code »).* Si cette donnée n'est pas incluse dans les données transmises par le terminal de paiement, elle est recherchée par le serveur de traitement.

Du côté du serveur bancaire, le procédé de traitement est le suivant :
- réception (T01) des données en provenance du terminal de paiement, comprenant l'identifiant du conteneur de paiement ;
- obtention (T02) d'un identifiant de commerçant, éventuellement accompagné d'un code de catégorie de marchand lorsque celui-ci n'est pas fourni par le commerçant ;
- en fonction de l'identifiant du conteneur de paiement, détermination (T03) d'un identifiant d'un établissement bancaire auquel le conteneur de paiement est attaché ;
- en fonction de l'identifiant bancaire du conteneur de paiement, obtention (T04) d'une autorisation de paiement ; et
- lorsque l'autorisation de paiement délivrée, une étape de transmission (T05), au terminal du commerçant, d'une donnée représentative de l'acceptation de la transaction ;
- lorsque l'autorisation de paiement est négative, une étape de transmission (T06), au terminal du commerçant, d'une donnée représentative d'un refus de la transaction.

Ainsi, du point de vue du commerçant, la transaction se déroule de la même manière qu'une transaction réalisée par carte bancaire. Comme explicité précédemment, l'autorisation de paiement est obtenue en fonction de l'identifiant de l'établissement bancaire :
- lorsque l'établissement bancaire du conteneur de paiement est le même que l'établissement bancaire du serveur de traitement (T041) :
   - obtention (T0411) des attributs du conteneur ;
   - vérification (T0412) du solde restant au sein le conteneur de paiement ;
   - lorsque le solde restant au sein du conteneur de paiement est supérieur au montant de la transaction (T0413) :
      - vérification (T0414) qu'aucun des attributs du conteneur de paiement n'est en contradiction avec les données de la transaction (montant maximum, catégorie de commerçant autorisée, etc.) ;
      - lorsqu'aucun (T0415) des attributs de paiement n'est violé, délivrance de l'autorisation de paiement ;
      - soustraction (T0416) un montant de la transaction du solde restant au sein du conteneur de paiement ;
   - lorsque le solde restant au sein du conteneur de paiement est inférieur au montant de la transaction (T0417), transmission d'une absence d'autorisation ;
- lorsque l'établissement bancaire du conteneur de paiement est différent de l'établissement bancaire du serveur de traitement (T042) :
   - identification (T0421) du serveur de traitement auquel les données de transaction doivent être transmises ;
   - transmission (T0422) des données de de transaction à ce serveur de traitement ;
   - réception (T0423) de l'autorisation ou du refus de paiement.

Les étapes mises en œuvre par le serveur de traitement récepteur des données de transaction sont sensiblement identiques à celles décrites précédemment.

### 5.5. Autres modes d'utilisation d'un conteneur de paiement.

On présente ci-après d'autres modes d'utilisation d'un conteneur de paiement en accord avec la présente technique. Ces autres modes d'utilisation tendent à supprimer l'usage d'un terminal de communication pour l'utilisation.

*Selon une première variante,* l'utilisation du conteneur de paiement par l'utilisateur est réalisée par l'intermédiaire d'une authentification biométrique chez le commerçant. Dans un premier temps l'utilisateur crée un conteneur de paiement, ce conteneur de paiement peut être limitée géographiquement, temporellement ou par son montant (comme explicité précédemment). Ensuite l'utilisateur se rend chez un commerçant. Au moment du paiement, l'utilisateur indique qu'il souhaite effectuer un paiement par conteneur de paiement et qu'il souhaite s'authentifier par biométrie.

L'utilisateur se soumet à une identification biométrique (typiquement, une lecture d'empreinte digitale), ce qui déclenche le paiement. Le système se heurte à une difficulté technique : lorsque le nombre d'utilisateurs s'accroit, l'identification du titulaire chez le marchand devient fastidieuse (car les temps de traitement s'allongent) et aussi source d'erreurs. En effet, l'entité qui effectue la comparaison biométrique (un serveur par exemple) doit comparer l'empreinte recueillie au magasin à toutes celles qui sont dans la base de données. Ainsi, du côté su serveur, il est proposé d'accélérer cette comparaison par plusieurs techniques :
(a) en faisant composer à l'utilisateur un code PIN de 4 chiffres : on alors divise par 10000 l'effort de comparaison ;
(b) en faisant entrer au marchand sur le terminal de paiement une information « Le client est un homme » ou « Le client est une femme » : on divise alors par deux l'effort de comparaison ;
(c) en supposant que l'utilisateur a sur lui son terminal de communication mobile on peut limiter la comparaison aux seules empreintes des titulaires de téléphones mobiles se trouvant à proximité du terminal de paiement du commerçant ;
(d) en requérant, de la part de l'utilisateur, la saisie des initiales (première lettre du nom, première lettre du prénom), afin de limiter les efforts de comparaison dans la base de donnée ; Cette information permet de diviser l'effort de comparaison par 26²=676 si on suppose que la distribution des premières lettres des noms et prénoms est uniforme. En pratique, ceci n'est pas nécessairement le cas, mais la réduction est tout de même importante.

Une telle utilisation suppose une éventuelle modification du processus de création du conteneur de paiement, afin que celui-ci comprenne un nouvel attribut, liée à l'empreinte digitale du créateur. L'empreinte digitale, en tant que telle, peut soit être déjà disponible sur le terminal de communication, soit être préenregistrée au niveau du serveur de traitement.

*Selon une deuxième variante,* le conteneur de paiement, créé à l'aide d'un terminal de communication, peut être utilisé par deux personnes différentes : dans ce cas, soit il s'agit du créateur et d'une autre personne de son choix, soit il s'agit de deux personnes différentes du créateur. Dès lors, l'attribut destinataire peut comprendre une identification de plusieurs personnes. L'utilisation du conteneur est dès lors faite exclusivement sur le compte du créateur (pas de transmission possible). En cas de double authentification biométrique (comme proposé dans la précédente variante), deux données représentatives d'empreinte digitales sont utilisées à la place d'une seule.

Bien entendu, le nombre d'utilisateur n'est pas limité à deux.

Une telle utilisation suppose une éventuelle modification du processus de création du conteneur de paiement, afin que celui-ci comprenne un nouvel attribut, liée aux empreintes digitales du créateur et de la personne autorisée. L'empreinte digitale, en tant que telle, peut soit être déjà disponible sur le terminal de communication, soit être préenregistrée au niveau du serveur de traitement.

*Selon une troisième variante,* le conteneur de paiement peut être récurrent. Cela signifie que le conteneur de paiement comprend un attribut de périodicité, permettant au serveur de traitement de créer un nouveau conteneur de paiement, de manière autonome, en réalisant une copie d'un conteneur de paiement courant. Cette utilisation est par exemple intéressante lors de l'utilisation régulière d'un bien ou d'un service, sans qu'il soit nécessaire d'utiliser sa carte bancaire pour le faire. Prenons par exemple le cas d'un employé qui déjeune tous les midis près du travail. Le serveur de traitement créé, chaque jour, du lundi au vendredi, afin que l'utilisateur puisse effectuer son achat sans utiliser sa carte de paiement.

*Selon une quatrième variante,* l'utilisation du conteneur de paiement est surveillée par le serveur de traitement afin que celui-ci puisse mettre en œuvre des mesures antifraude. Lorsqu'un conteneur de paiement, par exemple périodique, est utilisé de manière différente (par exemple en terme de localisation ou de fourchette de montant) des habitudes du créateur, une confirmation de paiement peut être requise auprès de l'utilisateur voire un blocage du conteneur peut être mis en œuvre par le serveur de traitement.

### 5.6. Dispositifs de mise en œuvre.

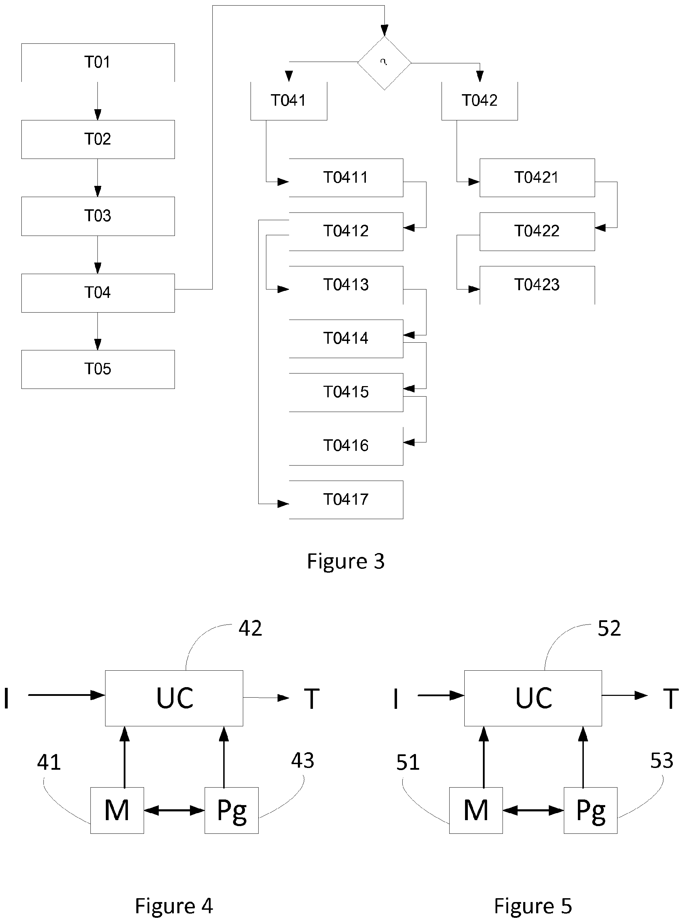

On décrit, en relation avec la figure 4, un dispositif de création et d'utilisation de conteneur de paiement comprenant des moyens permettant l'exécution des procédés décrits préalablement.

Par exemple, le dispositif de traitement comprend une mémoire 41 constituée d'une mémoire tampon, une unité de traitement 42, équipée par exemple d'un microprocesseur, et pilotée par le programme d'ordinateur 43, mettant en œuvre les étapes nécessaires à la création de conteneur de paiement d'une part et à leur utilisation d'autre part.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple un ensemble de lexèmes initiaux ou des données de dictionnaires existant. Le microprocesseur de l'unité de traitement 42 met en œuvre les étapes du procédé, selon les instructions du programme d'ordinateur 43 pour permettre l'accès au bien ou au service.

Pour cela, le dispositif de traitement comprend, outre la mémoire tampon 41, des moyens d'obtention d'une information externe au dispositif, comme un ensemble de données accessibles en base ; ces moyens peuvent se présenter sous la forme d'un module d'accès à un réseau de communication tel qu'une carte réseau. Le dispositif comprend également des moyens de traitement, de ces données pour délivrer des données permettant de sélectionner ou saisir des attributs de conteneur de paiement ; ces moyens de traitement comprennent par exemple un processeur spécialisé dans cette tâche ; le dispositif comprend également un ou plusieurs moyens d'accès à une ou plusieurs bases de données, tel que des bases de données de contact et/ou des bases de données de compte bancaires et/ou des bases de données de cartes bancaires. Le dispositif comprend également un module de lecture sans contact et/ou un module de prise de vue tel qu'une caméra.

Ces moyens peuvent être pilotés par le processeur de l'unité de traitement 42 en fonction du programme d'ordinateur 43.

On décrit, en relation avec la figure 5, un dispositif traitement de conteneur de paiement comprenant des moyens permettant l'exécution des procédés décrits préalablement, se rapportant à la création de conteneur de paiement ou au traitement de l'utilisation de conteneur de paiement par un utilisateur.

Par exemple, le dispositif de vérification comprend une mémoire 51 constituée d'une mémoire tampon, une unité de traitement 52, équipée par exemple d'un microprocesseur, et pilotée par le programme d'ordinateur 53, mettant en œuvre nécessaires à la mise en œuvre des fonctions de vérification.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple une requête de création ou d'utilisation d'un conteneur de paiement. Le microprocesseur de l'unité de traitement 52 met en œuvre les étapes du procédé de création, selon les instructions du programme d'ordinateur 53 pour permettre la création ou l'utilisation d'un tel conteneur

Pour cela, le dispositif comprend, outre la mémoire tampon 51, des moyens de traitement adaptés ; ces moyens peuvent se présenter sous la forme d'un processeur ou d'un ensemble de ressources sécurisées permettant de sécuriser la création et le traitement de conteneur de paiement. Le dispositif comprend également des moyens de traitement cryptographiques ; ces moyens de traitement comprennent par exemple un processeur de chiffrement dédié et des clés de chiffrement, comme des clés de session dérivée d'une clé initiale.

Ces moyens peuvent être pilotés par le processeur de l'unité de traitement 52 en fonction du programme d'ordinateur 53.

## Revendications

1. Procédé de mise en œuvre d'une transaction de paiement par l'intermédiaire d'une structure de données de paiement, dite conteneur de paiement, ledit conteneur de paiement comprenant au moins une donnée représentative d'un identifiant bancaire d'un utilisateur, ledit procédé comprenant :
- une phase de création dudit conteneur de paiement, mise en œuvre par un terminal de communication, comprenant :
- la sélection (C20), par l'utilisateur et par l'intermédiaire d'une interface homme-machine, d'au moins un attribut pour ledit conteneur de paiement, ladite sélection comprenant la sélection d'au moins une valeur d'attribut pour au moins un des paramètres suivants :
- catégorie de bénéficiaire du conteneur de paiement ;
- bénéficiaire du conteneur de paiement.
- l'obtention (C30), par le terminal de communication, d'au moins une donnée représentative d'une carte bancaire de l'utilisateur ;
- la validation (C40), par l'utilisateur et par l'intermédiaire de ladite interface homme-machine, de la création du conteneur de paiement;
- la création, suite à ladite validation, dudit conteneur de paiement, ledit conteneur de paiement comprenant ledit au moins un attribut sélectionné et ladite au moins une donnée représentative d'une carte bancaire de l'utilisateur ;
- la transmission (C50), par ledit terminal de communication, dudit conteneur de paiement à un serveur de traitement de conteneur de paiement ;
- la réception, par ledit terminal de communication, en provenance dudit serveur de traitement, d'un identifiant attribué audit conteneur de paiement par le serveur de traitement de conteneur de paiement ;
- une phase d'utilisation dudit conteneur de paiement pour la réalisation de la transaction de paiement auprès d'un commerçant possédant un terminal de paiement, comprenant :
- la réception, par ledit terminal de paiement en provenance dudit terminal de communication, dudit identifiant attribué audit conteneur de paiement par le serveur de traitement ;
- la mise en œuvre, par le terminal de paiement, de la transaction de paiement en relation avec le serveur de traitement.

2. Procédé selon la revendication 1, **caractérisé en ce que** ladite étape d'obtention (C30) par le terminal de communication, d'au moins une donnée représentative de la carte bancaire de l'utilisateur comprend :
- une étape de transmission, à ladite carte bancaire, par l'intermédiaire d'une interface de transmission de données sans contact, d'une requête d'obtention de données, sous la forme d'un signal ;
- une étape de réception d'une réponse à ladite requête, sous la forme d'un signal modulé ;
- une étape de décodage dudit signal modulé délivrant ladite au moins une donnée.

3. Procédé selon la revendication 1, **caractérisé en ce que** ladite étape d'obtention (C30) par le terminal de communication, d'au moins une donnée représentative de la carte bancaire de l'utilisateur comprend :
- une étape d'activation d'un dispositif de prise de vue du terminal de communication ;
- une étape d'obtention, à l'aide du dispositif de prise de vue, d'une image de la carte bancaire ;
- une étape de mise en œuvre d'un module de reconnaissance de caractères, à partir de l'image de la carte bancaire, délivrant ladite au moins une donnée.

4. Procédé selon la revendication 1, **caractérisé en ce qu'**il comprend en outre une étape de détermination, par ledit terminal de communication, d'une valeur représentative d'un attribut de transmission dudit conteneur de paiement.

5. Procédé selon la revendication 4, **caractérisé en ce que** lorsque la valeur représentative de l'attribut de transmission dudit conteneur de paiement est positive, le procédé comprend en outre une étape de détermination, par ledit terminal de communication, d'une valeur représentative d'un attribut de débit dudit conteneur de paiement.

6. Procédé selon la revendication 1, **caractérisé en ce qu'**il comprend, préalablement à la sélection d'un paramètre de conteneur,
- l'activation (C10), sur le terminal de communication de l'utilisateur d'un module de gestion de conteneur de paiement ;
- la sélection (C10-1), au sein de ce module, d'un mode de fonctionnement dit de création de conteneur.

7. Procédé selon la revendication 6, **caractérisé en ce que** l'activation du module de gestion est accompagnée de l'authentification dudit utilisateur auquel ledit terminal de communication et ladite carte de paiement appartiennent.

8. Procédé selon la revendication 1, **caractérisé en ce que** la sélection, par un utilisateur et par l'intermédiaire d'une interface homme-machine, d'au moins un attribut dudit conteneur comprend la sélection d'au moins une valeur d'attribut pour au moins un des paramètres suivants :
- date de validité du conteneur de paiement ;
- durée de validité du conteneur de paiement ;
- montant du conteneur de paiement.

9. Procédé selon l'une des revendications 1 à 8, , ledit procédé étant **caractérisé en ce qu'**il comprend en outre les étapes suivantes, mises en œuvre par le serveur de traitement :
- réception (T01) de données en provenance du terminal de paiement, comprenant ledit identifiant du conteneur de paiement ;
- obtention (T02) d'un identifiant de commerçant, éventuellement accompagné d'un code de catégorie de marchand lorsque celui-ci n'est pas fourni par le commerçant ;
- en fonction de l'identifiant du conteneur de paiement, détermination (T03) d'un identifiant d'un établissement bancaire auquel le conteneur de paiement est attaché ;
- en fonction de l'identifiant bancaire du conteneur de paiement, obtention (T04) d'une autorisation de paiement, ladite étape d'obtention d'une autorisation de paiement comprenant une étape de vérification que lesdits identifiant de commerçant et/ou code de catégorie de marchand font partie des valeurs d'attribut des paramètres suivants dudit conteneur de paiement :
- catégorie de bénéficiaire du conteneur de paiement, pour ledit code de catégorie de marchand ;
- bénéficiaire du conteneur de paiement, pour ledit identifiant de commerçant ; et
- lorsque l'autorisation de paiement délivrée, une étape de transmission (T05), audit terminal de paiement, d'une donnée représentative de l'acceptation de la transaction ;

10. Procédé selon la revendication 9, **caractérisé en ce que** ladite étape d'obtention (T04) d'une autorisation de paiement comprend les étapes suivantes :
- lorsque l'établissement bancaire du conteneur de paiement est le même que l'établissement bancaire du serveur de traitement (T041) :
- obtention (T0411) des attributs du conteneur ;
- vérification (T0412) du solde restant au sein le conteneur de paiement ;
- lorsque le solde restant au sein du conteneur de paiement est supérieur au montant de la transaction (T0413) :
- vérification (T0414) qu'aucun des attributs du conteneur de paiement n'est en contradiction avec les données de la transaction (montant maximum, etc.) ;
- lorsqu'aucun (T0415) des attributs de paiement n'est violé, délivrance de l'autorisation de paiement ;
- soustraction (T0416) un montant de la transaction du solde restant au sein du conteneur de paiement ;
- lorsque le solde restant au sein du conteneur de paiement est inférieur au montant de la transaction (T0417), transmission d'une absence d'autorisation ;

11. Procédé selon la revendication 10, **caractérisé en ce que** ladite étape d'obtention (T04) d'une autorisation de paiement comprend les étapes suivantes :
- lorsque l'établissement bancaire du conteneur de paiement est différent de l'établissement bancaire du serveur de traitement (T042) :
- identification (T0421) du serveur de traitement auquel les données de transaction doivent être transmises ;
- transmission (T0422) des données de de transaction à ce serveur de traitement ;
- réception (T0423) de l'autorisation ou du refus de paiement.

12. Terminal de communication comprenant des moyens de mise en œuvre d'une transaction de paiement par l'intermédiaire d'un module de création d'une structure de données de paiement, dite conteneur de paiement, ledit conteneur de paiement comprenant au moins une donnée représentative d'un identifiant bancaire d'un utilisateur, et d'un module d'utilisation dudit conteneur de paiement pour la réalisation de la transaction de paiement auprès d'un commerçant possédant un terminal de paiement,
ledit module de création de la structure de données de paiement étant configuré pour permettre :
- la sélection (C20), par l'utilisateur et par l'intermédiaire d'une interface homme-machine, d'au moins un attribut pour ledit conteneur de paiement, ladite sélection comprenant la sélection d'au moins une valeur d'attribut pour au moins un des paramètres suivants :
- catégorie de bénéficiaire du conteneur de paiement ;
- bénéficiaire du conteneur de paiement ;
- l'obtention (C30), par le terminal de communication, d'au moins une donnée représentative d'une carte bancaire de l'utilisateur ;
- la validation (C40), par l'utilisateur et par l'intermédiaire de ladite interface homme-machine, de la création du conteneur de paiement ;
- la création, suite à ladite validation, dudit conteneur de paiement, ledit conteneur de paiement comprenant ledit au moins un attribut sélectionné et ladite au moins une donnée représentative d'une carte bancaire de l'utilisateur ;
- la transmission (C50), par ledit terminal de communication, dudit conteneur de paiement à un serveur de traitement de conteneur de paiement ;
- la réception, par ledit terminal de communication, en provenance dudit serveur de traitement, d'un identifiant attribué audit conteneur de paiement par le serveur de traitement de conteneur de paiement ;
ledit module de création de la structure de données de paiement étant configuré pour permettre :
- la transmission, audit terminal de paiement, dudit identifiant attribué audit conteneur de paiement par le serveur de traitement ;
- la mise en œuvre, par le terminal de paiement, de la transaction de paiement en relation avec le serveur de traitement.

13. Système de mise en œuvre d'une transaction de paiement par l'intermédiaire d'une structure de données de paiement, dite conteneur de paiement, ledit conteneur de paiement comprenant au moins une donnée représentative d'un identifiant bancaire d'un utilisateur, ledit système comprenant :
- un terminal de communication selon la revendication 12, lié audit conteneur de paiement ;
- un terminal de paiement;
- un serveur de traitement dudit conteneur de paiement, ledit conteneur de paiement faisant l'objet d'une utilisation auprès d'un commerçant possédant ledit terminal de paiement par un utilisateur disposant dudit terminal de communication lié audit conteneur de paiement, ledit serveur de traitement comprenant des moyens de :
- réception (T01) de données en provenance dudit terminal de paiement, comprenant un identifiant du conteneur de paiement ;
- obtention (T02) d'un identifiant de commerçant, éventuellement accompagné d'un code de catégorie de marchand lorsque celui-ci n'est pas fourni par le commerçant ;
- en fonction de l'identifiant du conteneur de paiement, détermination (T03) d'un identifiant d'un établissement bancaire auquel le conteneur de paiement est attaché ;
- en fonction de l'identifiant bancaire du conteneur de paiement, obtention (T04) d'une autorisation de paiement, ladite obtention d'une autorisation de paiement comprenant la vérification que lesdits identifiant de commerçant et/ou code de catégorie de marchand font partie des valeurs d'attribut des paramètres suivants dudit conteneur de paiement :
- catégorie de bénéficiaire du conteneur de paiement, pour ledit code de catégorie de marchand ;
- bénéficiaire du conteneur de paiement, pour ledit identifiant de commerçant;
et
- lorsque l'autorisation de paiement délivrée, transmission (T05), audit terminal de paiement, d'une donnée représentative de l'acceptation de la transaction.

14. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de mise en œuvre d'une transaction de paiement selon la revendication 1, lorsqu'il est exécuté sur un processeur.

## Patentansprüche

1. Verfahren zum Umsetzen einer Zahlungstransaktion durch eine Zahlungsdatenstruktur, die Zahlungsbehälter genannt wird, wobei der Zahlungsbehälter mindestens eine Dateneinheit aufweist, die für eine Bankkennung eines Nutzers repräsentativ ist, wobei das Verfahren aufweist:
- eine Erstellungsphase des Zahlungsbehälters, die durch ein Kommunikationsendgerät umgesetzt wird, umfassend:
- das Auswählen (C20) durch den Nutzer und über eine Mensch-Maschine-Schnittstelle mindestens eines Attributs für den Zahlungsbehälter, wobei das Auswählen ein Auswählen mindestens eines Attributwerts für mindestens einen der folgenden Parameter aufweist:
- Empfängerkategorie des Zahlungsbehälters;
- Empfänger des Zahlungsbehälters;
- das Erhalten (C30) durch das Kommunikationsendgerät mindestens einer Dateneinheit, die für eine Bankkarte des Nutzers repräsentativ ist;
- das Validieren (C40) durch den Nutzer und über die Mensch-Maschine-Schnittstelle des Erstellens des Zahlungsbehälters;
- das Erstellen des Zahlungsbehälters infolge des Validierens, wobei der Zahlungsbehälter das mindestens eine ausgewählte Attribut und die mindestens eine Dateneinheit aufweist, die für eine Bankkarte des Nutzers repräsentativ ist;
- das Übertragen (C50) durch das Kommunikationsendgerät des Zahlungsbehälters an einen Verarbeitungsserver des Zahlungsbehälters;
- das Empfangen durch das Kommunikationsendgerät von dem Verarbeitungsserver einer Kennung, die dem Zahlungsbehälter durch den Verarbeitungsserver des Zahlungsbehälters zugeordnet wird;
- eine Verwendungsphase des Zahlungsbehälters für das Durchführen der Zahlungstransaktion bei einem Händler, der ein Zahlungsendgerät besitzt, umfassend:
- das Empfangen durch das Zahlungsendgerät von dem Kommunikationsendgerät der Kennung, die dem Zahlungsbehälter durch den Verarbeitungsserver zugeordnet wird;
- das Umsetzen durch das Zahlungsendgerät der Zahlungstransaktion in Verbindung mit dem Verarbeitungsserver.

2. Verfahren nach Anspruch 1, **dadurch gekennzeichnet, dass** der Schritt des Erhaltens (C30) durch das Kommunikationsendgerät mindestens einer Dateneinheit, die für eine Bankkarte des Nutzers repräsentativ ist, aufweist:
- einen Schritt des Übertragens einer Datenerhebungsanfrage in Form von einem Signal über eine Schnittstelle zur kontaktlosen Datenübertragung an die Bankkarte;
- einen Schritt des Empfangens einer Antwort auf die Anfrage in Form von einem modulierten Signal;
- einen Schritt des Decodierens des modulierten Signals, der die mindestens eine Dateneinheit bereitstellt.

3. Verfahren nach Anspruch 1, **dadurch gekennzeichnet, dass** der Schritt des Erhaltens (C30) durch das Kommunikationsendgerät mindestens einer Dateneinheit, die für eine Bankkarte des Nutzers repräsentativ ist, aufweist:
- einen Schritt des Aktivierens einer Aufnahmevorrichtung des Kommunikationsendgeräts;
- einen Schritt des Erhaltens mit Hilfe der Aufnahmevorrichtung eines Bildes der Bankkarte;
- einen Schritt des Einsetzens eines Moduls zur Zeichenerkennung ausgehend von dem Bild der Bankkarte, der die mindestens eine Dateneinheit bereitstellt.

4. Verfahren nach Anspruch 1, **dadurch gekennzeichnet, dass** es ferner einen Schritt des Bestimmens durch das Kommunikationsendgerät eines Wertes aufweist, der für ein Übertragungsattribut des Zahlungsbehälters repräsentativ ist.

5. Verfahren nach Anspruch 4, **dadurch gekennzeichnet, dass**, wenn der Wert, der für das Übertragungsattribut des Zahlungsbehälters repräsentativ ist, positiv ist, das Verfahren ferner einen Schritt des Bestimmens durch das Kommunikationsendgerät eines Wertes aufweist, der für ein Übertragungsattribut des Zahlungsbehälters repräsentativ ist.

6. Verfahren nach Anspruch 1, **dadurch gekennzeichnet, dass** es vor dem Auswählen eines Behälter-Parameters
- das Aktivieren (C10) eines Verwaltungsmoduls des Zahlungsbehälters auf dem Kommunikationsendgerät des Nutzers,
- das Auswählen (C10-1) eines Betriebsmodus, der Erstellungsmodus des Behälters genannt wird, innerhalb dieses Moduls aufweist.

7. Verfahren nach Anspruch 6, **dadurch gekennzeichnet, dass** das Aktivieren des Verwaltungsmoduls vom Authentifizieren des Nutzers begleitet wird, dem das Kommunikationsendgerät und die Zahlungskarte gehören.

8. Verfahren nach Anspruch 1, **dadurch gekennzeichnet, dass** das Auswählen durch den Nutzer und über eine Mensch-Maschine-Schnittstelle mindestens eines Attributs des Zahlungsbehälters das Auswählen mindestens eines Attributwerts für mindestens einen der folgenden Parameter aufweist:
- Gültigkeitsdatum des Zahlungsbehälters;
- Gültigkeitsdauer des Zahlungsbehälters;
- Betrag des Zahlungsbehälters.

9. Verfahren nach einem der Ansprüche 1 bis 8, wobei das Verfahren **dadurch gekennzeichnet ist, dass** es ferner die folgenden Schritte aufweist, die von dem Verarbeitungsserver umgesetzt werden:
- Empfangen (T01) von Daten von dem Zahlungsendgerät, die die Kennung des Zahlungsbehälters aufweisen;
- Erhalten (T02) einer Händlerkennung, die eventuell von einem Händlerkategoriecode begleitet wird, wenn dieser nicht von dem Händler bereitgestellt wird;
- in Abhängigkeit von der Kennung des Zahlungsbehälters Bestimmen (T03) einer Kennung eines Bankinstituts, mit dem der Zahlungsbehälter verbunden wird;
- in Abhängigkeit von der Kennung des Zahlungsbehälters Erhalten (T04) einer Zahlungsgenehmigung, wobei der Schritt des Erhaltens einer Zahlungsgenehmigung einen Schritt des Überprüfens aufweist, dass die Händlerkennung und/oder der Händlerkategoriecode Teil der Attributwerte der folgenden Parameter des Zahlungsbehälters sind:
- Empfängerkategorie des Zahlungsbehälters für den Händlerkategoriecode;
- Empfänger des Zahlungsbehälters für den Händlerkategoriecode;
und,
- wenn die Zahlungsgenehmigung ausgestellt wird, einen Schritt des Übertragens (T05) einer Dateneinheit an das Zahlungsendgerät, die für die Annahme der Transaktion repräsentativ ist.

10. Verfahren nach Anspruch 9, **dadurch gekennzeichnet, dass** der Schritt des Erhaltens (T04) einer Zahlungsgenehmigung die folgenden Schritte aufweist:
- wenn das Bankinstitut des Zahlungsbehälters das gleiche ist wie das Bankinstitut des Verarbeitungsservers (T041):
- Erhalten (T0411) der Attribute des Behälters;
- Überprüfen (T0412) des Restbetrags in dem Zahlungsbehälter;
- wenn der Restbetrag in dem Zahlungsbehälter höher als der Betrag der Transaktion (T0413) ist:
- Überprüfen (T0414), dass keiner der Attribute des Zahlungsbehälters zu den Daten der Transaktion (Maximalbetrag usw.) in Widerspruch steht;
- wenn keines (T0415) der Zahlungsattribute verletzt wird, Ausstellen der Zahlungsgenehmigung;
- Abziehen (T0416) eines Betrags der Transaktion von dem Restbetrag in dem Zahlungsbehälter;
- wenn der Restbetrag in dem Zahlungsbehälter niedriger als der Betrag der Transaktion (T0417) ist, Übertragen eines Fehlens einer Genehmigung.

11. Verfahren nach Anspruch 10, **dadurch gekennzeichnet, dass** der Schritt des Erhaltens (T04) einer Zahlungsgenehmigung die folgenden Schritte aufweist:
- wenn das Bankinstitut des Zahlungsbehälters von dem Bankinstitut des Verarbeitungsservers (T042) verschieden ist:
- Identifizieren (T0421) des Verarbeitungsservers, an den die Transaktionsdaten übertragen werden müssen;
- Übertragen (T0422) der Daten der Transaktion an diesen Verarbeitungsserver;
- Empfangen (T0423) der Genehmigung oder der Ablehnung der Zahlung.

12. Kommunikationsendgerät, umfassend Mittel zum Umsetzen einer Zahlungstransaktion durch ein Modul zum Erstellen von einer Zahlungsdatenstruktur, die Zahlungsbehälter genannt wird, wobei der Zahlungsbehälter mindestens eine Dateneinheit aufweist, die für eine Bankkennung eines Nutzers und für ein Verwendungsmodul des Zahlungsbehälters für das Durchführen der Zahlungstransaktion bei einem Händler, der ein Zahlungsendgerät besitzt, repräsentativ ist,
wobei das Modul zum Erstellen von einer Zahlungsdatenstruktur konfiguriert ist, um zu ermöglichen:
- das Auswählen (C20) durch den Nutzer und über eine Mensch-Maschine-Schnittstelle mindestens eines Attributs für den Zahlungsbehälter, wobei das Auswählen ein Auswählen mindestens eines Attributwerts für mindestens einen der folgenden Parameter aufweist:
- Empfängerkategorie des Zahlungsbehälters;
- Empfänger des Zahlungsbehälters;
- das Erhalten (C30) durch das Kommunikationsendgerät mindestens einer Dateneinheit, die für eine Bankkarte des Nutzers repräsentativ ist;
- das Validieren (C40) durch den Nutzer und über die Mensch-Maschine-Schnittstelle des Erstellens des Zahlungsbehälters;
- das Erstellen des Zahlungsbehälters infolge des Validierens, wobei der Zahlungsbehälter das mindestens eine ausgewählte Attribut und die mindestens eine Dateneinheit aufweist, die für eine Bankkarte des Nutzers repräsentativ ist;
- das Übertragen (C50) durch das Kommunikationsendgerät des Zahlungsbehälters an einen Verarbeitungsserver des Zahlungsbehälters;
- das Empfangen durch das Kommunikationsendgerät von dem Verarbeitungsserver einer Kennung, die dem Zahlungsbehälter durch den Verarbeitungsserver des Zahlungsbehälter zugeordnet ist;
wobei das Modul zum Erstellen der Zahlungsdatenstruktur konfiguriert ist, um zu ermöglichen:
- das Übertragen an das Zahlungsendgerät der Kennung, die dem Zahlungsbehälter durch den Verarbeitungsserver zugeordnet ist;
- das Umsetzen durch das Zahlungsendgerät der Zahlungstransaktion in Verbindung mit dem Verarbeitungsserver.

13. System zum Umsetzen einer Zahlungstransaktion durch eine Zahlungsdatenstruktur, die Zahlungsbehälter genannt wird, wobei der Zahlungsbehälter mindestens eine Dateneinheit aufweist, die für eine Bankkennung eines Nutzers repräsentativ ist, wobei das System aufweist:
- ein Kommunikationsendgerät nach Anspruch 12, das mit dem Zahlungsbehälter verbunden ist;
- ein Zahlungsendgerät;
- einen Verarbeitungsserver des Zahlungsbehälters, wobei der Zahlungsbehälter Gegenstand einer Verwendung bei einem Händler, der das Zahlungsendgerät besitzt, durch einen Nutzer ist, der über das Kommunikationsendgerät verfügt, das mit dem Zahlungsbehälter verbunden ist, wobei der Verarbeitungsserver Mittel aufweist zum:
- Empfangen (T01) von Daten von dem Zahlungsendgerät, die eine Kennung des Zahlungsbehälters aufweisen;
- Erhalten (T02) einer Händlerkennung, die eventuell von einem Händlerkategoriecode begleitet ist, wenn dieser nicht von dem Händler bereitgestellt ist;
- in Abhängigkeit von der Kennung des Zahlungsbehälters Bestimmen (T03) einer Kennung eines Bankinstituts, mit dem der Zahlungsbehälter verbunden ist;
- in Abhängigkeit von der Kennung des Zahlungsbehälters Erhalten (T04) einer Zahlungsgenehmigung, wobei das Erhalten einer Zahlungsgenehmigung das Überprüfen aufweist, dass die Händlerkennung und/oder der Händlerkategoriecode Teil der Attributwerte der folgenden Parameter des Zahlungsbehälters sind:
- Empfängerkategorie des Zahlungsbehälters für den Händlerkategoriecode;
- Empfänger des Zahlungsbehälters für den Händlerkategoriecode
und,
- wenn die Zahlungsgenehmigung ausgestellt ist, Übertragen (T05) einer Dateneinheit, die für die Annahme der Transaktion repräsentativ ist, an das Zahlungsendgerät.

14. Computerprogrammprodukt, das von einem Kommunikationsnetz herunterladbar ist und/oder auf einem computerlesbaren Medium gespeichert und/oder von einem Mikroprozessor ausführbar ist, **dadurch gekennzeichnet, dass** es Programmcodebefehle für das Ausführen eines Verfahrens zum Umsetzen einer Zahlungstransaktion nach Anspruch 1 aufweist, wenn es auf einem Prozessor ausgeführt wird.

## Claims

1. Method for implementing a payment transaction by means of a payment data structure called a payment container, said payment container comprising at least one piece of data representing a user's bank identifier, said method comprising:
- a phase for creating said payment container, implemented by a communications terminal, comprising:
- the selection (C20), by the user and by means of a man-machine interface, of at least one attribute of said payment container, said selection comprising the selection of at least one attribute value for at least one of the following parameters:
- category of beneficiary of the payment container;
- beneficiary of the payment container;
- the obtaining (C30), by the communications terminal, of at least one piece of data representing the user's bank card;
- the validation (C40), by the user and by means of said man-machine interface, of the creation of the payment container;
- the creation, following said validation, of said payment container, said payment container comprising said at least one selected attribute and said at least one piece of data representing the user's bank card;
- the transmission (C50), by said communications terminal, of said payment container to a payment container processing server;
- the receiving, by said communications terminal, from said processing server, of an identifier assigned to said payment container by the payment container processing server;
- a phase for using said payment container for carrying out the payment transaction at a merchant having a payment terminal, comprising :
- the receiving, by said payment terminal, from said communications terminal, of said identifier assigned to said payment container by the processing server;
- the implementing, by the payment terminal, in relation with the processing server, of the payment transaction.

2. Method according to claim 1, **characterized in that** said step for the obtaining (C30), by the communications terminal, of at least one piece of data representing the user's bank card comprises:
- a step of transmission, to said bank card and by means of a contactless data transmission interface, of a request for obtaining data in the form of a signal;
- a step for receiving a response to said request, in the form of a modulated signal;
- a step for decoding said modulated signal delivering said at least one piece of data.

3. Method according to claim 1, **characterized in that** said step for the obtaining (C30), by the communications terminal, of at least one piece of data representing the user's bank card comprises:
- a step for activating a device for taking pictures of the communications terminal;
- a step for obtaining an image of the bank card by means of the device for taking pictures;
- a step for implementing a character recognition module, on the basis of the image of the bank card, delivering said at least one piece of data.

4. Method according to claim 1, **characterized in that** it further comprises a step for the determining, by means of said communications terminal, of a value representing an attribute of transmission of said payment container.

5. Method according to claim 4, **characterized in that** the method furthermore comprises a step, when the value representing the transmission attribute of said payment container is positive, for the determining, by said communications terminal, of a value representing an attribute of debit from said payment container.

6. Method according to claim 1, **characterized in that** it comprises, prior to the selection of a container parameter:
- the activation (C10), on the user's communications terminal, of a module for managing the payment container;
- the selection (C10-1), within this module, of a mode of operation called a container creation mode.

7. Method according to claim 6, **characterized in that** the activation of the management module is accompanied by the authentication of said user to whom said communications terminal and said payment card belong.

8. Method according to claim 1, **characterized in that** the selection by a user and by means of a man-machine interface of at least one attribute of said container comprises the selection of at least one attribute value for at least one of the following parameters:
- date of validity of the payment container;
- duration of validity of the payment container;
- amount of the payment container.

9. Method according to any one of claims 1 to 8, said method being **characterized in that** it further comprises the following steps, implemented by the processing server:
- receiving (T01) data from the payment terminal, comprising said identifier of the payment container;
- obtaining (T02) a merchant's identifier, possibly accompanied by a merchant category code when this code is not provided by the merchant;
- depending on the identifier of the payment container, determining (T03) an identifier of a banking institution to which the payment container is attached;
- depending on the banking identifier of the payment container, obtaining (T04) an authorization of payment, said step for obtaining an authorization of payment comprising a step for verifying that said merchant's identifier and/or merchant category code are among attributes values of the following parameters of said payment container:
- category of beneficiary of the payment container, as for said merchant category code;
- beneficiary of the payment container, as for said merchant's identifier;
and
- when the authorization of payment is delivered, a step of transmission (T05) to the merchant's terminal, of a piece of date representing acceptance of the transaction.

10. Method according to claim 9, **characterized in that** said step for obtaining (T04) an authorization of payment comprises the following steps:
- when the banking institution of the payment container is the same as the banking institution of the processing server (T041):
- obtaining (T0411) attributes of the container;
- verifying (T0412) the balance remaining within the payment container;
- when the balance remaining within the payment container is greater than the amount of the transaction (T0413):
- verifying (T0414) that none of the attributes of the payment container contradicts the data of the transaction (maximum amount, etc.);
- when none (T0415) of the payment attributes is infringed, issuing authorization of payment;
- subtracting (T0416) an amount of the transaction from the balance remaining within the payment container;
- when the balance remaining within the payment container is smaller than the amount of the transaction (T0417), transmitting an absence of authorization.

11. Method according to claim 10, **characterized in that** said step for obtaining (T04) a payment authorization comprises the following steps:
- when the banking institution of the payment container is different from the banking institution of the processing server (T042) :
- identifying (T0421) the processing server to which the transaction data must be transmitted;
- transmitting (T0422) data of the transaction to the processing server;
- receiving (T0423) authorisation or rejection of payment.

12. Communications terminal comprising means for implementing a payment transaction by means of a module for creating a payment data structure, called a payment container, said payment container comprising at least one piece of data representing a user's bank identifier, and a module for using said payment container for carrying out the payment transaction at a merchant having a payment terminal,
said module for creating a payment data structure being configured to enable:
- the selection (C20), by the user and by means of a man-machine interface, of at least one attribute of said payment container, said selection comprising the selection of at least one attribute value for at least one of the following parameters:
- category of beneficiary of the payment container;
- beneficiary of the payment container;
- the obtaining (C30), by the communications terminal, of at least one piece of data representing the user's bank card;
- the validation (C40), by the user and by means of said man-machine interface, of the creation of the payment container;
- the creation, following said validation, of said payment container, said payment container comprising said at least one selected attribute and said at least one piece of data representing the user's bank card;
- the transmission (C50), by said communications terminal, of said payment container to a payment container processing server;
- the receiving, by said communications terminal, from said processing server, of an identifier assigned to said payment container by the payment container processing server;
said module for creating the payment data structure being configured to enable:
- the transmission, to said payment terminal, of said identifier assigned to said payment container by the processing server;
- the implementing, by the payment terminal, in relation with the processing server, of the payment transaction.

13. System for implementing a payment transaction by means of a payment data structure, called a payment container, said payment container comprising at least one piece of data representing a user's bank identifier, said system comprising:
- a communications terminal according to claim 12, linked to said payment container;
- a payment terminal;
- a processing server for processing said payment container, said payment container being used with a merchant having said payment terminal by a user having said communications terminal linked to said payment container, said processing server comprising means for:
- receiving data (T01) coming from said payment terminal, comprising the identifier of the payment container;
- obtaining (T02) a merchant's identifier, possibly accompanied by a merchant category code when the code is not provided by the merchant;
- depending on the identifier of the payment container, determining (T03) an identifier of a bank institution to which the payment container is attached;
- depending on the bank identifier of the payment container, obtaining (T04) an authorization of payment, said obtaining of an authorization of payment comprising the verification that said merchant's identifier and/or merchant category code are among attributes values of the following parameters of said payment container:
- category of beneficiary of the payment container, as for said merchant category code;
- beneficiary of the payment container, as for said merchant's identifier; and
- when the authorization of payment is delivered, a step of transmission (T05), to the merchant's terminal, of a piece of data representing acceptance of the transaction.

14. Computer program product downloadable from a communications network and/or stored on a computer-readable carrier and/or executable by a microprocessor, **characterized in that** it comprises program code instructions to execute a method for implementing a payment transaction according to claim 1 when it is executed on a processor.
